# EUROPÄISCHE PATENTSCHRIFT

(11) **EP 4 344 849 B1**
(45) Veröffentlichungstag und Bekanntmachung des Hinweises auf die Patenterteilung: **25.11.2026**
(21) Anmeldenummer: 23196127.7
(22) Anmeldetag: 08.09.2023
(51) Int. Cl.: B29C 48/07, B29C 48/92, B29C 48/88

(54) **COMPUTERIMPLEMENTIERTES VERFAHREN ZUR ERMITTLUNG EINES SCHRUMPFVERHALTENS**
COMPUTER-IMPLEMENTED METHOD FOR DETERMINING A SHRINK BEHAVIOR
PROCÉDÉ MIS EN UVRE PAR ORDINATEUR POUR DÉTERMINER UN COMPORTEMENT DE RETRAIT

(30) Priorität: 27.09.2022 DE 102022210169
(43) Veröffentlichungstag der Anmeldung: 03.04.2024
(73) Patentinhaber: Continental Reifen Deutschland GmbH, 30175 Hannover (DE)
(72) Erfinder: Lies, Alexander, 30165 Hannover (DE)
(74) Vertreter: Continental Corporation

(56) Entgegenhaltungen:
- DE-A1- 102014 214 315
- DE-A1- 4 018 051
- JP-A- 2000 211 016
- JP-A- S6 049 912
- US-A- 4 882 104
- US-A1- 2013 154 144

## Beschreibung

Die Erfindung betrifft ein computerimplementiertes Verfahren zur Ermittlung eines Schrumpfverhaltens in Extrusionsrichtung eines extrudierten Profils, bei welchem das Profil, bevor es eine Kühlstrecke durchläuft, eine Dickenmessvorrichtung durchläuft, wobei die Dickenmessvorrichtung die Oberfläche des Profils zur Bestimmung der Dicke des Profils in Extrusionsrichtung abtastet, bevor das Profil die Kühlstrecke durchläuft und eine weitere Dickenmessvorrichtung das Profil in Extrusionsrichtung abtastet, nachdem das Profil die Kühlstrecke durchlaufen hat,
Weiterhin betrifft die Erfindung ein Computerprogrammprodukt zum Ermitteln eines Schrumpfverhaltens eines extrudierten Profils sowie eine Extrusionsvorrichtung zum Ausführen des computerimplementierten Verfahrens.

Zur Ermittlung eines Schrumpfverhaltens eines Extrudates in Extrusionsrichtung sind Verfahren bekannt, die Markierungen an einem Profil nach dem Verlassen des Extruders anbringen, wobei diese Markierungen im erkalteten Zustand des Profils zur Ermittlung des Schrumpfverhaltens herangezogen werden. Hierzu ist ein zusätzlicher Verfahrensschritt notwendig, der eine Markierung mechanisch einprägt oder eine optische Markierung auf das Profil aufträgt. Hierbei hat sich gezeigt, dass mechanisch eingeprägte Markierungen schwerlich automatisiert optisch erfassbar sind. Auf das Profil aufgebrachte optische Markierungen weisen regelmäßig keine ausreichende Genauigkeit auf und können das Erscheinungsbild des Profils unerwünscht verändern.

Verfahren und Vorrichtungen zum Bestimmen eines Schrumpfverhaltens eines Extrudates sind aus DE 40 18 051 A1, JP 2000 211016 A, JP S60 49912 A, DE 10 2014 214315 A1, US 4 882 104 A und US 2013/154144 A1 bekannt.

Vor diesem Hintergrund liegt der Erfindung die Aufgabe zugrunde, ein Verfahren zum Ermitteln eines Schrumpfverhaltens in Extrusionsrichtung eines Profils derart auszuführen, dass es eine hohe Zuverlässigkeit und Genauigkeit aufweist, ohne dass das Erscheinungsbild des Profils unerwünscht verändert wird.

Diese Aufgabe wird gelöst mit einem computerimplementierten Verfahren gemäß den Merkmalen des Patentanspruches 1 sowie einem Computerprogrammprodukt zum Ermitteln eines Schrumpfverhaltens eines extrudierten Profils sowie einer Extrusionsvorrichtung zum Ausführen des computerimplementierten Verfahrens gemäß den nebengeordneten Ansprüchen.

Die Unteransprüche betreffen besonders zweckmäßige Weiterbildungen der Erfindung.

Erfindungsgemäß ist also ein computerimplementiertes Verfahren zur Ermittlung eines Schrumpfverhaltens in Extrusionsrichtung eines extrudierten Profils vorgesehen, bei welchem das Profil, bevor es eine Kühlstrecke durchläuft, eine Dickenmessvorrichtung durchläuft, wobei die Dickenmessvorrichtung die Oberfläche des Profils zur Bestimmung der Dicke des Profils in Extrusionsrichtung abtastet, bevor das Profil die Kühlstrecke durchläuft und eine weitere Dickenmessvorrichtung das Profil in Extrusionsrichtung abtastet, nachdem das Profil die Kühlstrecke durchlaufen hat, wobei anhand eines Vergleichs der Messwerte der Dicken des Profils der Dickenmessvorrichtung und der weiteren Dickenmessvorrichtung die Messwerte der Dickenmessvorrichtung eines Abschnitts des Profils den Messwerten des Abschnitts des Profils der weiteren Dickenmessvorrichtung zugeordnet werden.

Eine Dickenmessvorrichtung ist eine Vorrichtung, die dazu eingerichtet ist, die Dicke eines extrudierten Profils zu vermessen, insbesondere über eine Vielzahl von nahen beieinander liegenden Punkten des Profils, über zumindest einen Abschnitt des Profils. Die Dickenmessvorrichtung ist dazu eingerichtet die Dicke des Profils in Extrusionsrichtung an einer Vielzahl von Punkten zu bestimmen, sie kann auch dazu eingerichtet sein die Dicke des Profils senkrecht zur Extrusionsrichtung an einer Vielzahl von Punkten zu bestimmen. Das Abtasten der Dickenmessvorrichtungen kann mechanisch oder aber berührungslos erfolgen.

Die Kühlstrecke ist dazu eingerichtet das Profil nach dem Extrudieren abzukühlen und kann verschiedene Ausführungsform haben.

Unter Zuordnen von Messwerten der Dickenmessvorrichtung zu Messwerten der weiteren Dickenmessvorrichtung wird verstanden, dass anhand der erzeugten Messwerte erkannt wird, dass der Abschnitt des Profils, der mit der Dickenmessvorrichtung vermessen worden ist, mit dem Abschnitt des Profils übereinstimmt, der mit der zweiten Dickenmessvorrichtung vermessen worden ist.

Erfindungsgemäß ist also ein computerimplementiertes Verfahren vorgesehen, dass ohne das Vorsehen von Markierungen an dem Profil das Schrumpfverhalten des Profils in Extrusionsrichtung ermittelt, indem es die Dicke des Profils an einer Vielzahl von Punkten, die sich in einer Nähe zueinander befinden, bestimmt. Das so erzeugte linienförmige Abbild der Oberfläche, wird mit dem linienförmigen Abbild der Oberfläche vom gleichen Abschnittes Profils jedoch von der weiteren Dickenmessvorrichtung erzeugt, verglichen. Wird anhand des Vergleiches erkannt, dass der gleiche Abschnitt des Profils erneut vermessen wurde, kann beispielsweise anhand der Länge der Kühlstrecke und der Fördergeschwindigkeit anhand der zwischen den Messvorgängen vergangenen Zeit auf das Schrumpfverhalten des Profils zurückgeschlossen werden. Alternativ kann aus der Streckung oder Stauchung des linienförmigen Abbilds der Oberfläche auf eine Streckung oder Stauchung des Profils zurückgeschlossen.

Eine bevorzugte Ausführungsform sieht vor, dass die Dickenmessvorrichtung sowie die weitere Dickenmessvorrichtung jeweils einen Sender und einen Empfänger aufweisen, wobei Sender und Empfänger bevorzugt jeweils auf derselben Seite des extrudierten Profils angeordnet sind. Es hat sich als vorteilhaft herausgestellt eine Dickenmessvorrichtung mit einem Sender und einem Empfänger zu verwenden da berührungslose Messverfahren, insbesondere bei duktilen Profilen, eine höhere Genauigkeit aufweisen sowie eine hohe Zuverlässigkeit bei einem geringen Wartungsaufwand. Es hat sich als vorteilhaft erwiesen Verfahren anzuwenden, bei denen Sender und Empfänger an der gleichen Seite des Profils angeordnet sind, da hierdurch eine Vielzahl unterschiedlicher Werkstoffe und Geometrien vermessen werden können, ohne dass eine aufwändige Justierung der Dickenmessvorrichtung notwendig wird.

Eine weitere bevorzugte Ausführungsform sieht vor, dass das extrudierte Profil intransparent ist und bevorzugt Kautschuk aufweist. Eine Vielzahl von Profilen sind intransparent und weisen bevorzugterweise Kautschuk auf, so dass ein Verfahren zum Bestimmen einer Schrumpfung für derartige Profile besonders relevant ist.

Eine weitere bevorzugte Ausführungsform sieht vor, dass die Dickenmessgeräte elektromagnetische Strahlung aussenden und empfangen, insbesondere Laserstrahlung, bevorzugt mit einer Messfrequenz mit zumindest 10 Hz, weiter bevorzugt mit zumindest 20 Hz, weiter bevorzugt mit zumindest 30 Hz und weiter bevorzugt mit zumindest 40 Hz, wobei die Laserstrahlung insbesondere mit einem Laserscanner auf das Profil gerichtet wird. Zur Ermittlung der Dicke des Profils hat sich elektromagnetische Strahlung als besonders geeignet erwiesen, da diese bei einer Vielzahl von Geometrie und Werkstoffen zuverlässig genaue Messergebnisse liefert. Eine hohe Messfrequenz ermöglicht eine hohe Auflösung der Oberflächentopografie, wobei sich die Verwendung von Laserstrahlung, insbesondere mit einem Laserscanner abgelenkt, als besonders geeignet erwiesen hat.

Eine weitere bevorzugte Ausführungsform sieht vor, dass anhand der Zuordnung der Messwerte der Dickenmessvorrichtung und den Messwerten der weiteren Dickenmessvorrichtung zu einem Abschnitt des Profils mittels einer bekannten Strecke und einer bekannten Fördergeschwindigkeit zwischen den Dickenmessvorrichtungen das Schrumpfverhalten ermittelt wird. Ein Vergleich von Messwerten, die von der Dickenmessvorrichtung und der weiteren Dickenmessvorrichtung ermittelt wurden, ohne eine Zuordnung der Messwerte zu ein und demselben Abschnitt des Profils ist möglich. Ein Schrumpfverhalten ist bestimmbar. Durch eine Zuordnung der Messwerte der beiden Dickenmessvorrichtungen zu ein und demselben Abschnitt des Profils, können jedoch spezifischere Aussagen über das Schrumpfverhalten des Profils in Extrusionsrichtung gemacht werden, da beispielsweise mittels der Durchlaufdauer des Profils von der Dickenmessvorrichtung zu der weiteren Dickenmessvorrichtung auf das Schrumpfverhaltens zurückgeschlossen werden kann.

Eine weitere bevorzugte Ausführungsform sieht vor, dass anhand des Vergleichs der Messwerte der Dicke des Profils der Dickenmessvorrichtung und der weiteren Dickenmessvorrichtung das Schrumpfverhalten anhand von Unterschieden in den Messwerten bestimmt wird, wobei insbesondere der räumliche Abstand von zueinander zugeordneten Messwerten ausgewertet wird. Es hat sich als vorteilhaft herausgestellt das Schrumpfverhalten anhand von Unterschieden in Messwerten zu bestimmen, da beispielsweise anhand des Wiedererkennens der Oberflächentopografie der räumliche Abstand zwischen einzelnen Messwerten bestimmt werden kann, sowie die Änderung dieses Abstands beim Durchlaufen der Kühlstrecke, sodass das Schrumpfverhalten eines spezifischen Abschnitts oder eines Teils dieses Abschnitts bestimmt werden kann. Die Folgen von Änderungen von Verfahrensparametern beispielsweise können hierdurch schneller und somit effizienter sowie genauer bestimmt werden.

Eine weitere bevorzugte Ausführungsform sieht vor, dass Fördergeschwindigkeiten des Profils zwischen der Dickenmessvorrichtung und der weiteren Dickenmessvorrichtung basierend auf dem ermittelten Schrumpfverhalten verändert werden. Ein automatisiertes Anpassen der Fördergeschwindigkeiten an das ermittelte Schrumpfverhalten des Profils, ermöglicht es das Schrumpfverhalten automatisiert zu beeinflussen.

Erfindungsgemäß ist ein Computerprogrammprodukt zum Ermitteln eines Schrumpfverhaltens eines extrudierten Profils, umfassend Befehle, die bei der Ausführung des Programms durch zumindest eine Prozessoreinheit diese veranlasst das erfindungsgemäße Verfahren auszuführen, vorgesehen. Durch das Ausführen des Computerprogrammprodukts ist ohne das Vorsehen von Markierungen an dem Profil des Schrumpfverhalten des Profils in Extrusionsrichtung ermittelbar.

Erfindungsgemäß ist eine Extrusionsvorrichtung zum Ausführen des erfindungsgemäßen computerimplementierten Verfahrens vorgesehen, aufweisend:
- einen Extrusionskopf,
- einer Dickenmessvorrichtung in Extrusionsrichtung vor einer Kühlstrecke angeordnet,
- die Kühlstrecke,
- eine weitere Dickenmessvorrichtung in Extrusionsrichtung nach der Kühlstrecke angeordnet,
- eine Prozessoreinheit zum Ermitteln der Schrumpfung des Profils in Extrusionsrichtung.

Die Extrusionsvorrichtung ermöglicht beim Ausführen des computerimplementierten Verfahrens, ohne das Vorsehen von Markierungen an dem Profil, das Schrumpfverhalten des Profils in Extrusionsrichtung zu ermitteln.

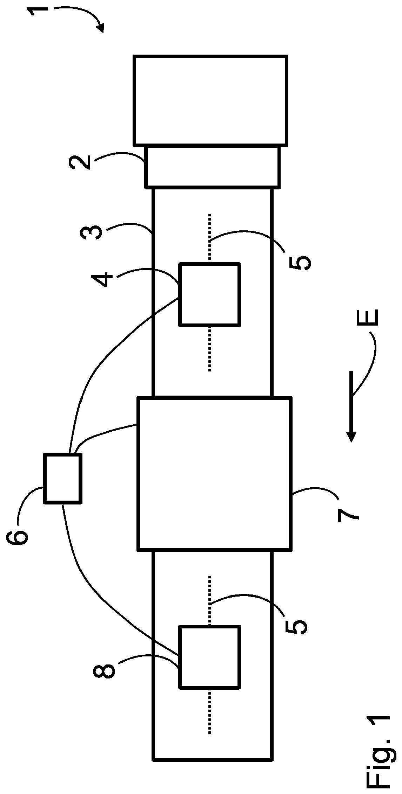

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
Fig. 1 eine Extrusionsvorrichtung mit zwei Dickenmessvorrichtungen.

Figur 1 zeigt eine Extrusionsvorrichtung 1 mit einem Extrusionskopf 2 zum Extrudieren eines Profils 3. Das Profil 3 wird nach dem Verlassen des Extrusionskopf 2 mit einer Dickenmessvorrichtungen 4 vermessen. Die Dickenmessvorrichtung 4 weist hierzu oberhalb sowie unterhalb des Profils 3 angeordnet jeweils ein System auf, das die Oberflächentopografie ermittelt. Hierzu wird ein unausgelenkter Laserstrahl mit einer Frequenz von 40 Hz auf das durchlaufende Profil 2 projiziert und dessen Reflexion mittels Sensoren, die neben dem Laserscanner angeordnet sind, empfangen. Die so beidseits des Profils 3 erzeugten Messwerte verlaufen über die gleiche Messstrecke 5 des Profils 3, so das mittels einer Prozessoreinheit 6 die Dicke des Profils 3 an jeder Position, über die Messstrecke 5, bestimmt werden kann.

Nach dem Vermessen mit der Dickenmessvorrichtung 4 durchläuft das Profil 3 eine Kühlstrecke 7 in der das Profil 3 abgekühlt wird. Durch die Förderung des Profils 3 durch die Kühlstrecke 7 kann das Profil 3 gestaucht oder gestreckt werden.

Nach dem Verlassen der Kühlstrecke 7 wird das Profil 3 mit einer weiteren Dickenmessvorrichtung 8 in gleicher Weise wie mit der Dickenmessvorrichtung 4 vermessen. Anhand der Länge der Kühlstrecke 7 und der Fördergeschwindigkeit kann ein Zeitfenster bestimmt werden, in dem die bereits vermessene Messstrecke 5 des Profils 3 die weitere Dickenmessvorrichtung 8 durchläuft. Ein Messen des gleichen Abschnitts des Profils 3 wird somit erleichtert. Die Messwerte über den erneut vermessenen Abschnitt des Profils 3 werden ebenfalls einer Prozessoreinheit 5 übermittelt, die die Messwerte der Dickenmessvorrichtung 4 sowie der weiteren Dickenmessvorrichtung 8 von derselben Messstrecke 5 und demselben Abschnitt des Profils 3 miteinander vergleicht und anhand des Vergleichs der Messwerte eine Streckung oder Stauchung ermittelt, die das Profil 3 zwischen den Dickenmessvorrichtungen 4, 8 erfahren hat. Hierzu wird ermittelt, inwiefern Messwerte, die aufgrund ihres Wertes einer bestimmten Position des Profils zugeordnet werden, sich zu anderen Messwerten, die aufgrund ihres Wertes ebenfalls einer bestimmten Position das Profil zugeordnet werden, ihren Abstand zu den anderen Messwerten verändert haben. Um die Messwerte bestimmten Positionen der Messstrecke 5 und somit dem Profil 3 zuzuordnen, werden die Verläufe der Oberflächentopografie der beiden Dickenmessvorrichtungen 4, 8 miteinander verglichen.

### Bezugszeichenliste

- 1: Extrusionsvorrichtung
- 2: Extrusionskopf
- 3: Profil
- 4: Dickenmessvorrichtung
- 5: Messstrecke

- 6: Prozessoreinheit
- 7: Kühlstrecke
- 8: weiter Dickenmessvorrichtung

- E: Extrusionsrichtung

## Patentansprüche

1. Computerimplementiertes Verfahren zur Ermittlung eines Schrumpfverhaltens in Extrusionsrichtung (E) eines extrudierten Profils (3), bei welchem das Profil (3), bevor es eine Kühlstrecke (7) durchläuft, eine Dickenmessvorrichtung (4) durchläuft, **dadurch gekennzeichnet, dass** die Dickenmessvorrichtung (4) die Oberfläche des Profils (3) zur Bestimmung der Dicke des Profils (3) in Extrusionsrichtung (E) abtastet, bevor das Profil (3) die Kühlstrecke (7) durchläuft und eine weitere Dickenmessvorrichtung (8) das Profil (3) in Extrusionsrichtung (E) abtastet, nachdem das Profil (3) die Kühlstrecke (7) durchlaufen hat, wobei anhand eines Vergleichs der Messwerte der Dicken des Profils (3) der Dickenmessvorrichtung (4) und der weiteren Dickenmessvorrichtung (7) die Messwerte der Dickenmessvorrichtung (4) eines Abschnitts des Profils (3) den Messwerten des Abschnitts des Profils (3) der weiteren Dickenmessvorrichtung (8) zugeordnet werden.

2. Computerimplementiertes Verfahren nach Anspruch 1, **dadurch gekennzeichnet, dass** die Dickenmessvorrichtung (4) sowie die weitere Dickenmessvorrichtung (8) jeweils einen Sender und einen Empfänger aufweisen, wobei Sender und Empfänger bevorzugt jeweils auf derselben Seite des extrudierten Profils (3) angeordnet sind.

3. Computerimplementiertes Verfahren nach den Ansprüchen 1 oder 2, **dadurch gekennzeichnet, dass** extrudierte Profil (3) intransparent ist und bevorzugt Kautschuk aufweist.

4. Computerimplementiertes Verfahren nach einem der vorangehenden Ansprüche, **dadurch gekennzeichnet, dass** die Dickenmessgeräte (4, 8) elektromagnetische Strahlung aussenden und empfangen, insbesondere Laserstrahlung, bevorzugt mit einer Messfrequenz mit zumindest 10 Hz, weiter bevorzugt mit zumindest 20 Hz, weiter bevorzugt mit zumindest 30 Hz und weiter bevorzugt mit zumindest 40 Hz, wobei die Laserstrahlung insbesondere mit einem Laserscanner auf das Profil (3) gerichtet wird.

5. Computerimplementiertes Verfahren nach einem der vorangehenden Ansprüche, **dadurch gekennzeichnet, dass** anhand der Zuordnung der Messwerte der Dickenmessvorrichtung (4) und den Messwerten der weiteren Dickenmessvorrichtung (8) zu einem Abschnitt des Profils (3) mittels einer bekannten Strecke und einer bekannten Fördergeschwindigkeit zwischen den Dickenmessvorrichtungen (4, 8) das Schrumpfverhalten ermittelt wird.

6. Computerimplementiertes Verfahren nach einem der vorangehenden Ansprüche, **dadurch gekennzeichnet, dass** anhand des Vergleichs der Messwerte der Dicke des Profils (3) der Dickenmessvorrichtung (4) und der weiteren Dickenmessvorrichtung (8) das Schrumpfverhalten anhand von Unterschieden in den Messwerten bestimmt wird, wobei insbesondere der räumliche Abstand von zueinander zugeordneten Messwerten ausgewertet wird.

7. Computerimplementiertes Verfahren nach einem der vorangehenden Ansprüche, **dadurch gekennzeichnet, dass** Fördergeschwindigkeiten des Profils (3) zwischen der Dickenmessvorrichtung (4) und der weiteren Dickenmessvorrichtung (8) basierend auf dem ermittelten Schrumpfverhalten verändert werden.

8. Computerprogrammprodukt zum Ermitteln eines Schrumpfverhaltens eines extrudierten Profils, umfassend Befehle, die bei der Ausführung des Programms durch zumindest eine Prozessoreinheit (6) diese veranlasst das computerimplementierte Verfahren nach einem der Ansprüche 1 bis 7 auszuführen.

9. Extrusionsvorrichtung zum Ausführen des computerimplementierten Verfahrens nach einem der Ansprüche 1 bis 7 aufweisend:
- einen Extrusionskopf (2),
- einer Dickenmessvorrichtung (4) in Extrusionsrichtung (E) vor einer Kühlstrecke (7) angeordnet,
- die Kühlstrecke (7),
- eine weitere Dickenmessvorrichtung (8) in Extrusionsrichtung (E) nach der Kühlstrecke (7) angeordnet,
- eine Prozessoreinheit (6) zum Ermitteln der Schrumpfung des Profils (3) in Extrusionsrichtung (E).

## Claims

1. Computer-implemented method for determining shrinkage behaviour in the direction of extrusion (E) of an extruded profile (3), in which the profile (3), before passing through a cooling zone (7), passes through a thickness measuring device (4), **characterized in that** the thickness measuring device (4) scans the surface of the profile (3) in the direction of extrusion (E) for determining the thickness of the profile (3) before the profile (3) passes through the cooling zone (7) and a further thickness measuring device (8) scans the profile (3) in the direction of extrusion (E) after the profile (3) has passed through the cooling zone (7), wherein, on the basis of a comparison of the measured values of the thicknesses of the profile (3) of the thickness measuring device (4) and of the further thickness measuring device (7), the measured values of the thickness measuring device (4) for a section of the profile (3) are assigned to the measured values for the section of the profile (3) of the further thickness measuring device (8).

2. Computer-implemented method according to Claim 1, **characterized in that** the thickness measuring device (4) and the further thickness measuring device (8) each comprise a transmitter and a receiver, wherein the transmitter and the receiver are preferably each arranged on the same side of the extruded profile (3).

3. Computer-implemented method according to Claim 1 or 2, **characterized in that** the extruded profile (3) is non-transparent and preferably comprises rubber.

4. Computer-implemented method according to one of the preceding claims, **characterized in that** the thickness measuring devices (4, 8) emit and receive electromagnetic radiation, in particular laser radiation, preferably at a measuring frequency of at least 10 Hz, more preferably of at least 20 Hz, more preferably of at least 30 Hz and more preferably of at least 40 Hz, wherein the laser radiation is directed onto the profile (3) in particular by means of a laser scanner.

5. Computer-implemented method according to one of the preceding claims, **characterized in that** the shrinkage behaviour is determined on the basis of the assignment of the measured values of the thickness measuring device (4) and the measured values of the further thickness measuring device (8) in relation to a section of the profile (3) by means of a known distance and a known conveying speed between the thickness measuring devices (4, 8).

6. Computer-implemented method according to one of the preceding claims, **characterized in that**, on the basis of the comparison of the measured values of the thickness of the profile (3) of the thickness measuring device (4) and of the further thickness measuring device (8), the shrinkage behaviour is determined on the basis of differences in the measured values, wherein in particular the spatial distance between measured values assigned to one another is evaluated.

7. Computer-implemented method according to one of the preceding claims, **characterized in that** conveying speeds of the profile (3) between the thickness measuring device (4) and the further thickness measuring device (8) are changed on the basis of the shrinkage behaviour determined.

8. Computer program product for determining shrinkage behaviour of an extruded profile, comprising commands which, when the program is executed by at least one processor unit (6), cause it to perform the computer-implemented method according to one of Claims 1 to 7.

9. Extrusion apparatus for performing the computer-implemented method according to one of Claims 1 to 7, comprising:
- an extrusion head (2),
- a thickness measuring device (4) arranged upstream of a cooling zone (7) in the direction of extrusion (E),
- the cooling zone (7),
- a further thickness measuring device (8) arranged downstream of the cooling zone (7) in the direction of extrusion (E),
- a processor unit (6) for determining the shrinkage of the profile (3) in the direction of extrusion (E).

## Revendications

1. Procédé mis en œuvre par ordinateur pour établir un comportement de retrait dans une direction d'extrusion (E) d'un profilé extrudé (3), dans lequel le profilé (3) passe par un dispositif de mesure d'épaisseur (4) avant de passer par une section de refroidissement (7), **caractérisé en ce que** le dispositif de mesure d'épaisseur (4) balaie la surface du profilé (3) pour déterminer l'épaisseur du profilé (3) dans la direction d'extrusion (E) avant que le profilé (3) ne passe par la section de refroidissement (7), et **en ce qu'**un autre dispositif de mesure d'épaisseur (8) balaie le profilé (3) dans la direction d'extrusion (E) après que le profilé (3) est passé par la section de refroidissement (7), dans lequel une comparaison des valeurs mesurées des épaisseurs du profilé (3) du dispositif de mesure d'épaisseur (4) et de l'autre dispositif de mesure d'épaisseur (7) permet d'attribuer les valeurs mesurées du dispositif de mesure d'épaisseur (4) d'une portion du profilé (3) aux valeurs mesurées de la portion du profilé (3) de l'autre dispositif de mesure d'épaisseur (8).

2. Procédé mis en œuvre par ordinateur selon la revendication 1, **caractérisé en ce que** le dispositif de mesure d'épaisseur (4) ainsi que l'autre dispositif de mesure d'épaisseur (8) présentent respectivement un émetteur et un récepteur, l'émetteur et le récepteur étant de préférence respectivement disposés du même côté du profilé extrudé (3).

3. Procédé mis en œuvre par ordinateur selon les revendications 1 ou 2, **caractérisé en ce que** le profilé extrudé (3) est opaque et présente de préférence du caoutchouc.

4. Procédé mis en œuvre par ordinateur selon l'une quelconque des revendications précédentes, **caractérisé en ce que** les appareils de mesure d'épaisseur (4, 8) émettent et reçoivent un rayonnement électromagnétique, en particulier un rayonnement laser, de préférence d'une fréquence de mesure d'au moins 10 Hz, de plus grande préférence d'au moins 20 Hz, de plus grande préférence d'au moins 30 Hz et de plus grande préférence d'au moins 40 Hz, dans lequel le rayonnement laser est dirigé sur le profilé (3), en particulier à l'aide d'un scanner laser.

5. Procédé mis en œuvre par ordinateur selon l'une quelconque des revendications précédentes, **caractérisé en ce que** l'attribution des valeurs mesurées du dispositif de mesure d'épaisseur (4) et des valeurs mesurées de l'autre dispositif de mesure d'épaisseur (8) à une portion du profilé (3) permet d'établir le comportement de retrait au moyen d'une section connue et d'une vitesse de transport connue entre les dispositifs de mesure d'épaisseur (4, 8).

6. Procédé mis en œuvre par ordinateur selon l'une quelconque des revendications précédentes, **caractérisé en ce que** la comparaison des valeurs mesurées de l'épaisseur du profilé (3) du dispositif de mesure d'épaisseur (4) et de l'autre dispositif de mesure d'épaisseur (8) permet de déterminer le comportement de retrait à l'aide de différences entre les valeurs mesurées, dans lequel en particulier la distance spatiale de valeurs mesurées mutuellement attribuées est évaluée.

7. Procédé mis en œuvre par ordinateur selon l'une quelconque des revendications précédentes, **caractérisé en ce que** les vitesses de transport du profilé (3) entre le dispositif de mesure d'épaisseur (4) et l'autre dispositif de mesure d'épaisseur (8) sont modifiées sur la base du comportement de retrait établi.

8. Produit de programme informatique pour établir un comportement de retrait d'un profilé extrudé, comprenant des instructions qui, lorsque le programme est exécuté par au moins une unité de processeur (6), amène celle-ci à exécuter le procédé mis en œuvre par ordinateur selon l'une quelconque des revendications 1 à 7.

9. Dispositif d'extrusion pour exécuter le procédé mis en œuvre par ordinateur selon l'une quelconque des revendications 1 à 7, présentant :
- une tête d'extrusion (2),
- un dispositif de mesure d'épaisseur (4) disposé dans la direction d'extrusion (E) avant une section de refroidissement (7),
- la section de refroidissement (7),
- un autre dispositif de mesure d'épaisseur (8) disposé dans la direction d'extrusion (E) après la section de refroidissement (7),
- une unité de processeur (6) pour établir le retrait du profilé (3) dans la direction d'extrusion (E).
